Europäisches Patentamt

(19) **European Patent Office**

**Office européen des brevets**

(11) Numéro de publication: **0 005 101**

**B1**

(12) **FASCICULE DE BREVET EUROPEEN**

(45) Date de publication du fascicule de brevet: **23.09.81**

(51) Int. Cl.³: **F 16 K 17/02**

(21) Numéro de dépôt: **79400225.3**

(22) Date de dépôt: **05.04.79**

(54) Soupape de régulation à déclenchement automatique.

(30) Priorité: **14.04.78 FR 7811035**

(43) Date de publication de la demande:
**31.10.79 Bulletin 79/22**

(45) Mention de la délivrance du brevet:
**23.09.81 Bulletin 81/38**

(84) Etats Contractants Désignés:
**BE DE GB IT NL**

(56) Documents cités:
**FR - A - 1 108 577**
**FR - A - 1 505 971**
**DE - B - 1 083 096**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Regnier, Jean 270, Avenue du Luberon F-04100 Manosque (FR)**

(74) Mandataire: **Mongredien, André et al, c/o Brevatome 25, rue de Ponthieu F-75008 Paris (FR)**

Courier Press, Leamington Spa, England.

## Soupape de régulation à déclenchement automatique

La présente invention a pour objet une soupape de régulation à déclenchement automatique, destinée à réguler et à limiter à une valeur donnée la pression régnant à l'intérieur d'une enceinte étanche.

Plus précisément, l'invention concerne une soupape du type comportant un élément mobile qui, destiné à obturer de façon étanche une ouverture prévue dans une enceinte en coopérant avec un siège solidaire de cette dernière, est en contact par l'une de ses faces avec le fluide de l'enceinte et soumis sur son autre face à l'application d'une force destinée à équilibrer une pression donnée du fluide correspondant à un seuil à ne pas dépasser.

On précise que dans une telle soupape l'élément mobile d'obturation de l'enceinte est susceptible de se déplacer lorsque la pression de l'enceinte dépasse un seuil prédéterminé, d'une première position extrême ou position basse pour laquelle il coopère avec le siège solidaire de l'enceinte vers une deuxième position extrême ou position haute définie par une butée, position pour laquelle il est écarté dudit siège.

Une soupape de ce type est connue du DE—B—1 083 096, dans lequel un fluide pneumatique sous pression agit directement sur l'élément d'obturation, pour exercer une contre pression. Toutefois, cette soupape présente l'inconvénient de ne pas permettre une montée rapide de l'élément mobile en position haute lorsque la pression à l'intérieur de l'enceinte s'élève brutalement au-dessus du seuil, ce qui entraîne des possibilités d'explosion de l'enceinte.

De plus, elles ne se prêtent pas à un réglage simple en fonction de la pression que l'on veut obtenir dans l'enceinte.

La présente invention a précisément pour objet une soupape permettant de pallier les inconvénients précités.

La soupape de régulation à déclenchement automatique objet de l'invention, du type comprenant un élément d'obturation mobile entre une position de fermeture dans laquelle il obture de façon étanche une ouverture prévue dans une enceinte et une position d'ouverture dans laquelle il est éloigné de ladite ouverture, un moyen à fluide pneumatique sous pression pour exercer une contre pression sur l'élément d'obturation afin de le maintenir dans sa position de fermeture lorsque la pression régnant dans l'enceinte est inférieure à une pression donnée, se caractérise en ce que ledit moyen est constitué par un vérin qui agit sur l'élément d'obturation par l'intermédiaire d'une liaison comprenant des moyens d'accouplement susceptibles de désaccoupler le vérin de l'élément d'obturation en cas d'augmentation rapide de la pression régnant dans l'enceinte.

La soupape telle que caractérisée ci-dessus tire avantageusement profit de l'utilisation d'un vérin pneumatique, et de l'accouplement de ce dernier à l'élément mobile de la soupape par l'intermédiaire d'un mécanisme permettant de libérer l'élément mobile pour une variation rapide de l'écart entre les pressions régnant respectivement dans l'enceinte et dans le vérin.

Ainsi, elle a notamment l'avantage de permettre:

— un contrôle des déplacements de l'élément mobile grâce à un réglage approprié à tout instant de la poussée qu'exerce le vérin sur ce dernier,

— une montée rapide de l'élément mobile lors d'une élévation brutale de la pression de l'enceinte grâce au désaccouplement de l'élément mobile et du vérin qui constitue un ensemble ayant une inertie relativement importante,

— d'adapter le déplacement de l'élément mobile à diverses vitesses de montée en pression de l'enceinte,

— de maintenir si nécessaire l'enceinte dépressurisée.

Selon l'invention, le vérin comporte une tige de commande, dite première tige, prolongée par un manchon dans lequel s'engage l'une des extrémités d'une deuxième tige solidaire par son autre extrémité de l'élément d'obturation, les moyens d'accouplement comprenant au moins une bille logée dans la paroi du manchon et apte à s'emboîter partiellement, sous l'action d'un ressort taré, dans une gorge ménagée dans la deuxième tige.

Par ailleurs, chacune des billes est de préférence en contact avec un poussoir guidé en translation dans un fourreau solidaire à l'une de ses extrémités dudit manchon et recevant à son autre extrémité une vis coopérant avec un filetage complémentaire prévu dans le fourreau et ledit ressort est en appui à l'une et à l'autre de ses extrémités sur ledit poussoir et sur ladite vis.

Selon une disposition avantageuse de l'invention, la soupape comporte un réservoir tampon relié d'une part, par l'intermédiaire d'une vanne, à la zone du cylindre dudit vérin délimitée par la face du piston opposée à l'élément d'obturation et, d'autre part, à un système d'alimentation en air comprimé sous une pression donnée.

Cette disposition permet, pour un choix approprié du rapport des volumes respectifs du réservoir tampon et de la zone précitée du vérin, un réglage automatique approprié de la poussée exercée par le vérin.

Selon une autre disposition de l'invention, les zones du vérin situées de part et d'autre de piston sont reliées à une réservoir tampon par l'intermédiaire d'une vanne destinée à mettre en communication chacune des zones avec ledit réservoir ou avec l'atmosphère, ledit réservoir tampon étant relié à un système d'alimentation en air comprimé sous une pression donnée.

D'autre part, selon l'invention conforme à l'une des dispositions précitées, la zone du cylindre du vérin délimitée par la face du piston opposée à l'élément d'obturation est reliée audit réservoir tampon par l'intermédiaire d'un robinet.

Ainsi, le réglage de la poussée exercée par le vérin dépend avantageusement non seulement du rapport des volumes du réservoir tampon et du vérin, mais également de la perte charge établie à travers le robinet, cette dernière variant avec la vitesse de la montée en pression de l'enceinte.

D'autres caractéristiques et avantages de la présente invention apparaîtront plus clairement à la lecture de la description qui suit d'un exemple de réalisation donné à titre illustratif mais nullement limitatif d'une soupape selon l'invention.

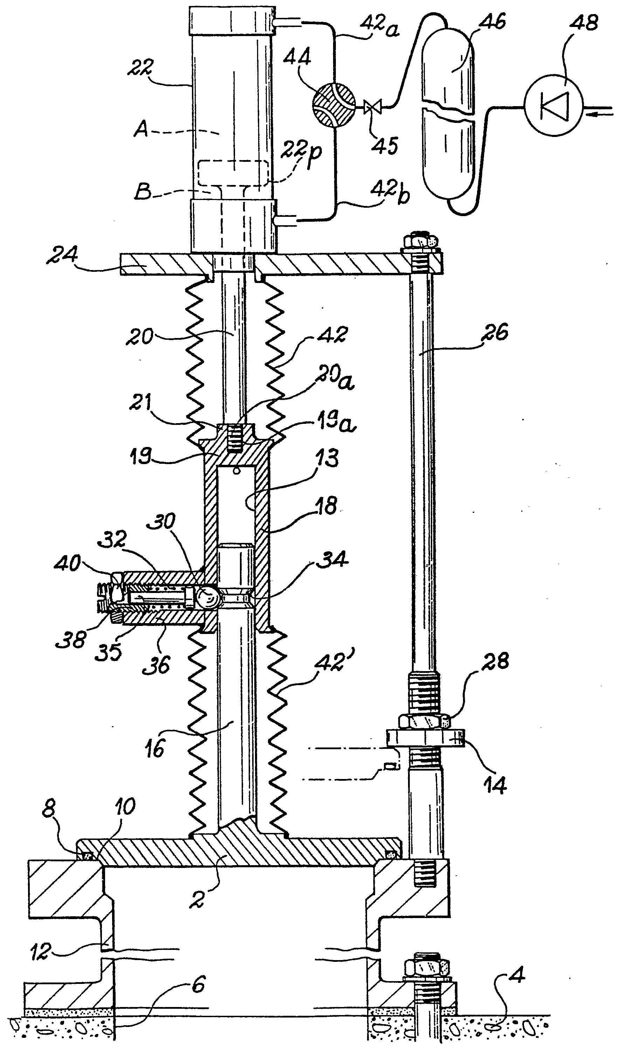

Cette description sera faite au regard de la figure unique schématique annexée sur laquelle on a représenté en coupe verticale un mode de réalisation d'une soupape selon l'invention.

On voit sur la figure unique que la soupape comporte un clapet 2 destiné à obturer de façon étanche une ouverture 6 ménagée dans une enceinte 4 contenant un fluide dont la pression ne doit pas dépasser un seuil prédéterminé.

A cet effet, ledit clapet 2 est susceptible de se déplacer sous l'effet de la pression du fluide de l'enceinte 4 entre une position basse, pour laquelle il obture l'ouverture 6 de l'enceinte 4 en coopérant, par l'intermédiaire d'un joint d'etanchéité 8, avec un siège 10 porté par une pièce annulaire 12 rendue solidaire de l'enceinte 4, et une position haute pour laquelle il est arrêté par trois butées telles que 14.

Plus précisément, ledit clapet 2 est fixé à l'une des extrémités d'une tige 16 dont l'autre extrémité est engagée dans l'évidement 13 d'un manchon 18 solidarisé de la tige de commande 20 d'un vérin pneumatique 22, l'extrémité de la tige 16 étant rendue solidaire en translation du manchon 18 par des moyens d'accouplement déconnectables qui seront décrits ultérieurement.

On remarque sur la figure annexée que le vérin pneumatique 22 est supporté par une platine 24 montée sur trois colonnes telles que 26 et que chaque butée 14 est constituée par une pièce annulaire filetée destinée à coopérer avec un filetage complémentaire prévu sur chaque colonne 26, la butée 14 étant maintenue dans une position donnée par un écrou 28. Cette disposition permet de régler facilement la position de chaque butée 14 et par conséquent la longueur de la course maximale du clapet 2.

La tête 19 du manchon 18 est solidarisée de la tige de commande 20 du vérin pneumatique 22 de la manière suivante: la tête 19 comporte un évidement taraudé 19a coopérant avec un filetage complémentaire 20a prévu sur l'extrémité de la tige 20. Cette disposition permet de régler la distance entre la platine 24 et la tête 19 du manchon 18, cette distance devant être égale ou supérieure à la course maximale du clapet 2. Il va de soi que la distance entre l'extrémité libre de la tige 16 et le fond de l'évidement 13 est supérieure à la course maximale du clapet 2 fonction de la position de la butée 14.

On note que les moyens d'accouplement déconnectables prévus entre la tige 16 et le manchon 18 comportent trois billes telles que la bille 30, réparties à 120° autour de l'axe du manchon 18. Chaque bille 30 est logée dans la paroi du manchon 18 et elle este susceptible d'être emboîtée partiellement, sous l'action d'une ressort taré 32, dans une gorge de forme complémentaire 34 prévue dans la tige 16.

Plus précisément, le ressort taré 32 est en appui à l'une de ses extrémités sur un poussoir 35 en contact avec la bille 30, ce poussoir étant guidé en translation dans un fourreau 36 solidaire du manchon 18. A son autre extrémité le ressort 32 est en appui sur une vis de réglage 38 coopérant avec un filetage complémentaire prévu dans le fourreau 36, ladite vis 38 étant bloquée par un écrou 40.

On voit sur la figure annexée que, selon l'une des caractéristiques de l'invention, les zones A et B du vérin 22 situées de part et d'autre du piston 22p sont reliées par l'intermédiaire des canalisations 42a et 42b, d'une vanne 44 et d'un robinet 45 à un réservoir tampon 46 alimenté en air comprimé sous une pression déterminée réglable par un détendeur 48. La vanne 44 permet de mettre en communication chacune des zones A et B du vérin avec le réservoir 46 ou l'atmosphère extérieure et le robinet 45 permet de régler la perte de charge du fluide s'écoulant entre le vérin et le réservoir 46.

Par ailleurs, on remarque sur la figure qu'un soufflet de protection 42 est rendu solidaire de la platine 24 et de la tête 19 du manchon 18 et qu'un deuxième soufflet de protection 42' est rendu solidaire de l'extrémité libre du manchon 18 et du clapet 2.

Le mode de fonctionnement de la soupape représentée sur la figure annexée est le suivant.

On établit initialement dans la zone A du vérin 22 une pression d'air comprimé telle que le vérin exerce sur le clapet 2 une contre pression équilibrant une pression déterminée du fluide contenu dans l'enceinte correspondant à un seuil à ne pas dépasser. Le réglage de cette contre pression exercée par le vérin déterminant le seuil de pression dans l'enceinte à ne pas dépasser s'effectue au moyen du détendeur 48.

On règle également la vitesse d'augmentation de la pression du fluide contenu dans l'enceinte au-delà de laquelle les moyens d'accouplement prévus entre la tige 16 et le manchon 18 devront désaccoupler le vérin 22 du clapet 2. Ce réglage s'effectue d'une part, en restreignant plus ou moins 1a communication entre la zone A du vérin et le réservoir 46 au moyen du robinet 45, de façon à définir entre ces derniers une perte de charge donnée, d'autre part en comprimant plus ou moins les billes 30 au moyen des vis de réglage 38.

Lorsque la pression dans l'enceinte est inférieure au seuil déterminé par la contre pression exercée sur le clapet 2 par le vérin 22, le clapet engage de façon étanche son siège 10.

Lors d'une augmentation de la pression dans l'enceinte, la différence entre les forces opposées exercées sur le clapet 2 par le vérin 22 et par le fluide contenu dans l'enceinte 4 diminue jusqu'à s'annular lorsque ces forces s'équilibrent. Lorsque la pression régnant dans l'enceinte devient supérieure au seuil de pression déterminé préalablement au moyen du détendeur 48, le clapet se soulève de son siège et assure ainsi la régulation.

Lorsque la montée de la pression dans l'enceinte est lente, l'ouverture de la soupape est suffisante pour stabiliser ou faire baisser immédiatement la pression dans l'enceinte, de sorte que la force exercée sur le clapet 2 par le fluide contenu dans l'enceinte reste voisine de la force exercée par le vérin sur le clapet 2 au travers des billes 30 coopérant avec la gorge 34, cette dernière force augmentant elle même très peu en raison de la faible influence de la perte de charge définie par le robinet 45 lorsque le déplacement du piston 22p dans le cylindre du vérin est lent. Il en résulte que les forces opposées sur les billes 30 sont insuffisantes pour solliciter celles-ci hors de la gorge 34 à l'encontre de la force exercée par les ressorts 32. L'ensemble constitué par le clapet 2, le manchon 18 et la tige de commande 20 se soulève alors pour assurer la régulation.

Lors d'une montée rapide en pression dans l'enceinte, l'ouverture de la soupape n'est pas suffisante pour réduire instantanément la montée en pression. La force exercée sur le clapet 2 par le fluide contenu dans l'enceinte provoque donc un déplacement rapide vers le haut en considérant la figure de l'ensemble constitué par le clapet 2, le manchon 18 et la tige de commande 20 qui a pour conséquence, en raison de la perte de charge définie par le robinet 45, une augmentation brutale de la pression régnant dans la zone A du vérin. Les deux forces opposées agissant sur les billes 30 deviennent donc rapidement très importantes et sollicitent celles-ci hors de la gorge 34 à l'encontre de la force exercée par les ressorts 32. La tige 16, solidaire du clapet 2, se trouve alors désolidarisée de la tige 20 du vérin 22 et le clapet 2 se soulève rapidement jusqu'aux butées 14 sous l'action de la pression régnant dans l'enceinte.

On précise que le diamètre du clapet 2 est déterminé en fonction de la perte de charge maximale susceptible de s'établir à travers l'ouverture 6 pour un type d'accident de référence pouvant survenir dans l'enceinte.

Après une montée en pression rapide dans l'enceinte engendrant une désolidarisation des tiges 16 et 20, il est possible:

— soit de laisser le système en l'état, l'enceinte restant dépressurisée,

— soit de resolidariser les tiges 16 et 20 en mettant successivement en communication avec le réservoir tampon les zones B et A du vérin afin d'abord de relever le manchon 18 et par suite de réintroduire les billes 30 dans leur gorge 34, puis d'abaisser la tige du vérin 20 pour assurer à nouveau l'obturation étanche de l'enceinte.

On précise que l'on pourrait relever le manchon 18 en procédant à un apport d'air complémentaire par le détendeur 48. Cependant, on note que le fait d'effecteur, comme représenté sur la figure, la resolidarisation des tiges 16 et 20 à partir de l'air contenu dans le réservoir tampon 46 engendre un abaissement de la pression dans ce dernier et dans la zone A du vérin, ce qui entraîne un abaissement du seuil limite de pression à ne pas dépasser dans l'enceinte, cet abaissement allant dans le sens de la sécurité.

Cette possibilité est particulièrement intéressante dans tous les cas où un accident survenu dans l'enceinte risque de provoquer simultanément la destruction complète des installations pneumatique et électrique. Il faut alors prévoir soit d'agir manuellement sur la vanne 44, soit de commander celle-ci mécaniquement par des fins des course (non représentées) venant en contact avec le clapet 2.

### Revendications

1. Soupape de régulation à déclenchement automatique comprenant un élément d'obturation (2) mobile entre dune position de fermeture dans laquelle il obture de façon étanche une ouverture (6) prévue dans une enceinte (4) et une position d'ouverture dans laquelle il est éloigné de ladite ouverture, un moyen (22) à fluide pneumatique sous pression pour exercer une contre pression sur l'élément d'obturation afin de le maintenir dans sa position de fermeture lorsque la pression régnant dans l'enceinte est inférieure à une pression donnée, caractérisée en ce que ledit moyen est constitué par un vérin (22) qui agit sur l'élément d'obturation (2) par l'intermediaire d'une liaison (16, 18, 20) comprenant des moyens d'accouplement (30, 32, 34) susceptibles de désaccoupler le vérin de l'élément d'obturation en cas d'augmentation rapide de la pression régnant dans l'enceinte (4).

2. Soupape selon la revendication 1, caractérisée en ce que le vérin (22) comporte une tige de commande (20), dite première tige, prolongée par un manchon (18) dans lequel s'engage l'une des extrémités d'une deuxième tige (16) solidaire par son autre extrémité de l'élément d'obturation (2), les moyens d'accouplement comprenant au moins une bille (30) logée dans la paroi du manchon (18) et apte à s'emboîter partiellement, sous l'action d'un ressort taré (32) dans une gorge (34) ménagée dans la deuxième tige (16).

3. Soupape selon la revendication 2, caractérisée en ce que chacune des billes (30) est en contact avec un poussoir (35) guidé en translation dans un fourreau (36) solidaire à l'une de ses extrémités dudit manchon (18) et recevant à son extrémité une vis (38) coopérant avec un filetage complémentaire prévu dans le fourreau et en ce que ledit ressort (32) est en appui à l'une et à l'autre de ses extrémités sur ledit poussoir et sur ladite vis.

4. Soupape selon l'une quelconque des revendications 1 à 3, caractérisée en ce qu'elle comporte un réservoir tampon (46) relié d'une part l'intermédiaire d'une vanne (44), à la zone (A) du cylindre dudit vérin délimitée par la face du piston (22p) opposée à l'élément d'obturation (2) et, d'autre part, à un système d'alimentation en air comprimé sous une pression donnée.

5. Soupape selon l'une quelconque des revendications 1 à 3, caractérisée en ce que les zones (A, B) du vérin situées de part et d'autre du piston (22p) sont reliées à un réservoir tampon (46) par l'intermédiaire d'une vanne (44) destinée à mettre en communication chacune des zones avec ledit réservoir ou avec l'atmosphère, ledit réservoir tampon étant relié à un système d'alimentation en air comprimé sous une pression donnée.

6. Soupape selon l'une quelconque des revendications 4 et 5, caractérisée en ce que la zone (A) du cylindre du vérin délimitée par la face du piston (22p) opposée à l'élément d'obturation (2) est reliée audit réservoir tampon par l'intermédiaire d'un robinet (45) à perte de charge donnée.

**Patentansprüche**

1. Regelventil mit automatischer Auskupplung mit einem Verschlußelement (2), das beweglich ist zwischen einer Schließstellung, in der es eine in einem Behälter (4) vorgesehene Öffnung (6) dicht schließt, und einer Öffnungsstellung, in der es von der Öffnung entfernt ist, mit einer mit unter Druck stehendem pneumatischen Fluid arbeitenden Einrichtung, zur Ausübung eines Drucks auf das Verschlußelement, um es in seiner Schließstellung zu halten, wenn der im Behälter herrschende Druck kleiner als ein gegebener Druck ist, dadurch gekennzeichnet, daß die Einrichtung aus einem Stellmotor (22) besteht, der auf das Verschlußelement (2) über eine Verbindung (16, 18, 20) mit einer Kupplungseinrichtung (30, 32, 34) wirkt, die im Falle einer schnellen Erhöhung des im Behälter (4) herrschenden Drucks den Stellmotor vom Verschlußelement abkuppeln kann.

2. Ventil nach Anspruch 1, dadurch gekennzeichnet, daß der Stellmotor (22) eine erste Stange oder Steuerstange (22) aufweist, die durch eine Muffe (18) verlängert ist, in die eine der Enden einer zweiten Stange (16) eingreift, die mit ihrem anderen Ende fest mit dem Verschlußelement (2) verbunden ist, wobei die Kupplungseinrichtung wenigstens eine Kugel (30) aufweist, die in der Wand der Muffe (18) sitzt und unter der Wirkung einer eingestellten Feder (32) teilweise in eine in der zweiten Stange (16) ausgebildete Ringnut (34) einrastet.

3. Ventil nach Anspruch 2, dadurch gekennzeichnet, daß jede der Kugeln (30) mit einem Stößel (35) in Verbindung steht, der verschiebbar in einer Hülse (36) geführt ist, die mit einem ihrer Enden fest mit der Muffe (18) verbunden ist und an ihrem anderen Ende eine Schraube (38) aufnimmt, die mit einem komplementären Gewinde in der Hülse zusammenwirkt, und daß die Feder (32) am einen und anderen ihrer Enden am Stößel bzw. an der Schraube anliegt.

4. Ventil nach einem der Ansprüche 1 bis 3, gekennzeichnet durch, einen Pufferbehälter (46), der verbunden ist einerseits über ein Ventil (44) mit der Zone (A) des Zylinders des stellmotors, die durch die zum Verschlußelement (2) entgegengesetzte Seite des Kolbens (22p) begrenzt ist, und andererseits mit einem System zur Speisung mit unter einem gegebenen Druck stehender Druckluft.

5. Ventil nach einem der Ansprüche 1 bis 3, dadurch gekennzeichnet, daß die beiderseits des Kolbens (22p) gelegenen Zonen (A, B) des Stellmotors mit einem Pufferbehälter (46) über ein Ventil (44) verbunden sind, das jede der Zonen mit dem Behälter oder mit der Atmosphäre verbinden soll, wobei der Pufferbehälter mit einem System zur Speisung mit unter einem gegebenen Druck stehender Druckluft verbunden ist.

6. Ventil nach einem der Ansprüche 4 und 5, dadurch gekennzeichnet, daß die Zone (A) des Zylinders des Stellmotors, die durch die zum Verschlußelement (2) entgegengesetzte Seite des Kolbens (22p) begrenzt ist, über einen einen gegebenen Druckabfall aufweisenden Hahn (45) mit dem Pufferbehälter verbunden ist.

**Claims**

1. Regulation valve with automatic disconnection comprising a closure element (2) movable between a closed position in which it tightly closes an opening (6) provided in an enclosure (4) and an open position in which it uncovers said opening, a pneumatically-operated means (22) to provide a counterpressure on said closure element whereby to maintain it in its closed position when the pressure in said enclosure is below a predetermined value, characterized in that said means is constituted by a jack (22) acting on the closure element (2) through a connection (16, 18, 20) comprising coupling means (30, 32, 34) capable of decoupling the jack from the closing element in case of a rapid increase of pressure within the enclosure (4).

2. Valve according to Claim 1, characterized in that the jack (22) comprises a first piston rod (20) extended by a sleeve (18) in which is engaged one end of a second rod (18) solidly connected at its other end to the closure element (2), the coupling means comprising at least one ball (30) adapted to engage partially within a groove (34) in the second rod (18) under the urging of a calibrated spring (32).

3. Valve according to Claim 2 characterized in that each of the balls (30) is in contact with a piston slidable in a cylinder (36) solidly connected at one of its ends with the said sleeve (18) and having at its end a screw cooperating with a complementary thread provided in the cylinder, and in that the said spring is in contact at its respective ends with said piston and said screw.

4. Valve according to any one of the Claims 1 to 3 characterized in that it comprises a buffer reservoir (46) connected on the one hand, by way of a valve (44), to zone (A) of the cylinder of said jack limited by the face of the piston (22p) opposite to the closure element (2), and on the other hand to a supply system for compressed air at a predetermined pressure.

5. Valve according to any one of Claims 1 to 3 characterized in that the zones (A, B) of the jack situated on either side of the piston (22p) are connected to a buffer reservoir (46) by way of a valve (44) adapted to provide communication of each of the zones with said buffer reservoir or with the atmosphere, said buffer reservoir being connected to a supply system for compressed air at a predetermined pressure.

6. Valve according to any one of Claims 4 and 5 characterized in that the zone (A) of the cylinder of the jack limited by the face of the piston (22p) opposite to the closure element is connected to said buffer reservoir by way of a pre-set pressure-reducing valve (45).

0 005 101